# FASCICULE DE BREVET EUROPEEN

(11) **EP 1 055 857 B1**
(45) Date de publication et mention de la délivrance du brevet: **11.09.2002**
(21) Numéro de dépôt: 00401405.6
(22) Date de dépôt: 22.05.2000
(51) Int. Cl.: F16L 11/08

(54) **Tuyau souple en matière plastique multicouche**
Flexibles, mehrschichtiges Rohr aus Kunststoff
Plastic multilayer hose

(30) Priorité: 26.05.1999 FR 9906636
(43) Date de publication de la demande: 29.11.2000
(73) Titulaire: Hozelock Tricoflex S.A., 92500 Rueil Malmaison (FR)
(72) Inventeur: Maitay, Frédéric, Le Hamois, 51300 Vitry le Francois (FR); Leray, Fabrice, 51300 Maison en Champagne (FR)
(74) Mandataire: Robert, Jean-Pierre

(56) Documents cités:
- DE-A- 4 338 424
- FR-A- 1 547 394
- GB-A- 1 171 933
- US-A- 5 647 400

## Description

La présente invention concerne un tuyau souple en matière plastique multicouche pour le transport de fluides destiné par exemple à être implanté dans des installations fixes ou mobiles de distribution d'eau potable. GB 1171933 décrit un tuyau composite pour le transport de fluides à haute pression.

Actuellement, les éléments destinés à être implantés dans les circuits de distribution d'eau potable, comme par exemple les canalisations, les robinets, les raccords, doivent recevoir une attestation de conformité à des normes sanitaires de deux niveaux. Dans le premier niveau, l'élément ne peut être utilisé que pour des applications dans lesquelles il n'est en contact avec l'eau potable transportée que pendant de courtes durées, éventuellement de façon répétée. Dans le deuxième niveau, l'élément peut être utilisé pour toute application de transport d'eau potable et en particulier pour celles où l'eau est en contact continûment avec l'élément.

Parmi les éléments conformes au second niveau, les canalisations ont toutes une structure rigide. On connaît ainsi de telles canalisations qui sont réalisées en polyéthylène, en polypropylène ou en polychlorure de vinyle rigides spéciaux pour être inertes tant chimiquement que physiquement à l'égard de l'eau potable transportée. Ces canalisations sont de fabrication aisée et peu coûteuse de sorte que leur emploi est largement répandu dans les installations de distribution. Toutefois, la rigidité de ces canalisations en matière plastique introduit des limites quant à leur installation et leur entretien.

Il existe donc un besoin, non satisfait de manière commode à ce jour, d'une canalisation facilement implantable dans une installation de distribution d'eau potable de manière permanente ou temporaire.

A cet effet, on prévoit, selon l'invention, un tuyau souple en matière plastique multicouche comportant, de l'intérieur vers l'extérieur :
- une couche interne d'une polyoléfine inerte par rapport à l'eau,
- une couche de liaison ayant des propriétés d'adhésion envers la polyoléfine et le polychlorure de vinyle souple,
- une couche externe de polychlorure de vinyle souple,
- une armature tubulaire au contact du polychlorure de vinyle.

Le tuyau ainsi constitué présente une structure rendant celui-ci apte au transport de l'eau potable, ayant une souplesse facilitant l'implantation du tuyau et possédant de relativement bonnes qualités mécaniques notamment en ce qui concerne la résistance à l'éclatement à l'égard de la pression régnant généralement dans les circuits auquel ce tuyau est destiné et la résistance aux sollicitations extérieures.

Par ailleurs, il est apparu que ce tuyau présente une bonne résistance aux solvants en particulier à des températures inférieures à 40°C environ.

De plus, ce tuyau présente également une propriété de résistance aux acides et bases forts à des températures inférieures à 40°C.

Selon un mode de réalisation particulier, les couches ont des épaisseurs comprises entre :
- 0,1 mm à 1 mm environ pour la couche interne,
- 0,1 mm à 0,3 mm environ pour la couche de liaison,
- 0,5 mm à 4 mm environ pour la couche de polychlorure de vinyle.

Cette structure représente un compromis optimal entre souplesse et résistance mécanique.

D'autres caractéristiques et avantages de l'invention ressortiront à la lecture de la description qui suit d'un mode de réalisation particulier non limitatif de l'invention.

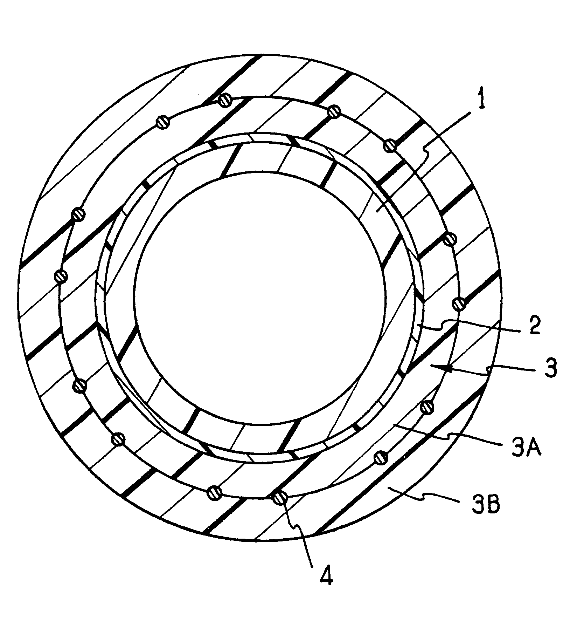

Il sera fait référence à la figure unique annexée représentant une vue en coupe transversale d'un tuyau conforme à l'invention.

En référence à la figure, le tuyau conforme à l'invention comprend une couche interne 1 réalisée en un polyéthylène dont les caractéristiques sont compatibles avec le transport de l'eau et sont conformes aux normes sanitaires prévoyant que cette couche puisse être en contact de façon continue avec de l'eau stagnante. Le matériau employé est notamment inerte physiquement et chimiquement à l'égard de l'eau transportée pour ne pas entraîner une modification inacceptable de la composition des denrées ou une altération des propriétés organoleptiques de celle-ci. La couche interne 1 a une épaisseur comprise entre 0,1 mm et 1 mm. La faible épaisseur de la couche interne rend celle-ci déformable et contribue à conférer de la souplesse au tuyau. A titre d'exemple, pour un diamètre interne du tuyau de 12 mm, la couche interne a une épaisseur d'environ 0,5 mm et le polyéthylène employé est le polyéthylène référencé HOSTALEM MPE80 produit par la société HOECHST. La couche interne 1 peut également être réalisée en toute autre polyoléfine agréée eau potable et notamment en polypropylène.

La couche interne 1 est recouverte d'une couche intermédiaire 2 assurant la liaison de la couche interne 1 avec une couche externe 3 réalisée en polychlorure de vinyle recouvrant la couche intermédiaire 2.

La couche intermédiaire 2 est réalisée dans un matériau ayant des propriétés d'adhésion envers le polyéthylène et le polychlorure de vinyle. En l'espèce, la couche intermédiaire 2 est réalisée à partir d'un copolymère éthylène - acétate de vinyle (EVA) qui permet d'obtenir une cohésion des couches 1 et 3. Le copolymère utilisé est apte à un contact alimentaire. On utilisera par exemple le matériau référencé ELVAX 170 de la société DUPONT DE NEMOURS. La couche intermédiaire 2 a une épaisseur comprise entre 0,1 mm et 0,3 mm, ici de l'ordre de 0,2 mm.

La couche externe 3 est ici formée d'une première couche 3A de polychlorure de vinyle souple ayant une épaisseur comprise entre 0,5 mm et 2 mm et une deuxième couche 3B de polychlorure de vinyle souple ayant également une épaisseur comprise entre 0,5 mm et 2 mm. Le polychlorure de vinyle utilisé est apte à un contact alimentaire. La couche externe 3 pourrait en outre être réalisée en une seule pièce.

Une armature tubulaire 4 est disposée au contact du polychlorure de vinyle entre les deux couches 3A et 3B de la couche externe 3. Bien entendu, l'armature tubulaire 4 pourrait également être disposée entre la couche intermédiaire 2 et la couche externe 3. L'armature tubulaire 4 est réalisée ici à base de fibres de polyéthylène téréphtalate (PET). Des fibres de polyamide ou de polypropylène pourraient également être utilisés.

Le tuyau ainsi réalisé est conforme à l'Arrêté du 29 mai 1997 relatif aux objets utilisés dans la distribution d'eau potable destinée à la consommation humaine.

Par ailleurs, on notera que ce tuyau possède des propriétés physico-chimiques le rendant résistant aux solvants et aux acides et bases forts à des températures inférieures à une quarantaine de degrés centigrades.

Le tuyau conforme à l'invention est réalisé selon la technique bien connue de coextrusion.

D'une manière générale, les épaisseurs des différentes couches sont déterminées de manière que le tuyau soit suffisamment souple et résistant et sont adaptées au diamètre interne du tuyau.

Bien entendu, l'invention n'est pas limitée au mode de réalisation décrit et on peut y apporter des variantes de réalisation sans sortir du cadre de l'invention tel que défini par les revendications.

## Revendications

1. Tuyau souple en matière plastique multicouche, **caractérisé en ce qu'**il comporte, de l'intérieur vers l'extérieur :
- une couche interne (1) d'une polyoléfine inerte par rapport à l'eau,
- une couche de liaison (2) ayant des propriétés d'adhésion envers la polyoléfine et le polychlorure de vinyle souple,
- une couche de polychlorure de vinyle (3) souple,
- une armature tubulaire (4) au contact du polychlorure de vinyle.

2. Tuyau selon la revendication 1, **caractérisé en ce que** la couche interne (1) est en polyéthylène.

3. Tuyau selon la revendication 1, **caractérisé en ce que** la couche interne (1) est en polypropylène.

4. Tuyau selon l'une des revendications 1 à 3, **caractérisé en ce que** la couche de liaison (2) est réalisée à partir d'un copolymère éthylène - acétate de vinyle.

5. Tuyau selon l'une des revendications précédentes, **caractérisé en ce que** l'armature (4) est située entre une première couche (3A) de polychlorure de vinyle et une seconde couche (3B) de polychlorure de vinyle formant ladite couche de polychlorure de vinyle (3).

6. Tuyau selon l'une des revendications précédentes, **caractérisé en ce que** l'armature (4) est à base de fibres de polyéthylène téréphtalate.

7. Tuyau selon l'une des revendications précédentes, **caractérisé en ce que** l'armature (4) est à base de fibres de polyamide.

8. Tuyau selon l'une des revendications précédentes, **caractérisé en ce que** les couches ont des épaisseurs comprises entre :
- 0,1 mm à 1 mm environ pour la couche interne (1),
- 0,1 mm à 0,3 mm environ pour la couche de liaison (2),
- 0,5 mm à 4 mm environ pour la couche de polychlorure de vinyle (3).

## Patentansprüche

1. Flexibles Rohr aus mehrschichtigem Kunststoffmaterial, **dadurch gekennzeichnet, daß** es von innen nach außen umfaßt:
- eine Innenschicht (1) aus einem gegenüber Wasser reaktionsträgen Polyolefin,
- eine Verbindungsschicht (2), die Hafteigenschaften gegenüber dem Polyolefin und gegenüber einem flexiblen Polyvinylchlorid hat,
- eine flexible Schicht aus Polyvinylchlorid (3),
- eine rohrförmige Armierung (4), die mit dem Polyvinylchlorid in Kontakt ist.

2. Rohr nach Anspruch 1, **dadurch gekennzeichnet, daß** die Innenschicht (1) aus Polyethylen besteht.

3. Rohr nach Anspruch 1, **dadurch gekennzeichnet, daß** die Innenschicht (1) aus Polypropylen besteht.

4. Rohr nach einem der Ansprüche 1 bis 3, **dadurch gekennzeichnet, daß** die Verbindungsschicht (2) aus einem Ethylen-Copolymer-Vinylazetat gebildet ist.

5. Rohr nach einem der vorhergehenden Ansprüche, **dadurch gekennzeichnet, daß** die Armierung (4) zwischen einer ersten Schicht (3A) aus Polyvinylchlorid und einer zweiten Schicht (3B) aus Polyvinylchlorid lagert, welche die Polyvinylchlorid-Schicht (3) bilden.

6. Rohr nach einem der vorhergehenden Ansprüche, **dadurch gekennzeichnet, daß** die Armierung (4) aus Polyethylenterephtalat-Fasern gebildet ist.

7. Rohr nach einem der vorhergehenden Ansprüche, **dadurch gekennzeichnet, daß** die Armierung (4) aus Polyamid-Fasern gebildet ist.

8. Rohr nach einem der vorhergehenden Ansprüche, **dadurch gekennzeichnet, daß** die Schichten eine Dicke aufweisen zwischen:
- etwa 0,1 mm und 1 mm bei der Innenschicht (1),
- etwa 0,1 mm bis 0,3 mm bei der Verbindungsschicht (2),
- etwa 0,5 und 4 mm bei der Polyvinylchlorid-Schicht (3).

## Claims

1. A flexible hose of multilayer plastics material, the hose being **characterized in that** it comprises, from the inside to the outside:
· an inner layer (1) of a polyolefin that is inert relative to water;
· a bonding layer (2) having adhesive properties relative to the polyolefin and to the flexible polyvinyl chloride;
· a layer of flexible polyvinyl chloride (3); and
· tubular reinforcement (4) in contact with the polyvinyl chloride.

2. A hose according to claim 1, **characterized in that** the inner layer (1) is of polyethylene.

3. A hose according to claim 1, **characterized in that** the inner layer (1) is of polypropylene.

4. A hose according to any one of claims 1 to 3, **characterized in that** the bonding layer (2) is made from a copolymer of ethylene and vinyl acetate.

5. A hose according to any preceding claim, **characterized in that** the reinforcement (4) is situated between first and second layers (3A, 3B) of polyvinyl chloride together making up said layer of polyvinyl chloride (3).

6. A hose according to any preceding claim, **characterized in that** the reinforcement (4) is based on fibers of polyethylene terephthalate.

7. A hose according to any preceding claim, **characterized in that** the reinforcement (4) is based on polyamide fibers.

8. A hose according to any preceding claim, **characterized in that** the layers have thicknesses lying in the following ranges:
· 0.1 mm to 1 mm approximately for the inner layer (1);
· 0.1 mm to 0.3 mm approximately for the bonding layer (2); and
· 0.5 mm to 4 mm approximately for the layer of polyvinyl chloride (3).
